# EUROPÄISCHE PATENTSCHRIFT

(11) **EP 2 924 010 B1**
(45) Veröffentlichungstag und Bekanntmachung des Hinweises auf die Patenterteilung: **12.02.2020**
(21) Anmeldenummer: 15159150.0
(22) Anmeldetag: 16.03.2015
(51) Int. Cl.: C02F 1/00, C02F 103/42, C02F 3/32

(54) **VERTEILSYSTEM ZUR EINLEITUNG VON WASSER IN EINE FILTERZONE**
DISTRIBUTION SYSTEM FOR INTRODUCING WATER IN A FILTER ZONE
SYSTÈME DE DISTRIBUTION POUR L'INTRODUCTION DE l'EAU DANS UNE ZONE DE FILTRATION

(30) Priorität: 28.03.2014 AT 502262014
(43) Veröffentlichungstag der Anmeldung: 30.09.2015
(73) Patentinhaber: Wesner, Wolfgang, 1220 Wien (AT); Kurzmann, Heimo, 5302 Henndorf (AT)
(72) Erfinder: Wesner, Wolfgang, 1220 Wien (AT); Kurzmann, Heimo, 5302 Henndorf (AT); Schardt, Christian, 4643 Pettenbach (AT)
(74) Vertreter: Vinazzer, Edith

(56) Entgegenhaltungen:
- EP-A1- 0 169 620
- EP-A1- 2 230 213
- EP-A2- 2 272 333
- WO-A2-01/51738
- DATABASE WPI Week 201414 Thomson Scientific, London, GB; AN 2014-C11936 XP002743527, -& CN 103 420 486 A (UNIV HOHAI) 4. Dezember 2013 (2013-12-04)

## Beschreibung

Die Erfindung betrifft ein Verteilsystem mit mit Löchern versehenen, zusammenfügbaren Rohren zur Einleitung von aus Schwimmteichen oder Schwimmbecken stammendem Wasser in eine Filterzone zur mechanischen, und/oder biologischen und/oder mineralischen bzw. chemischen Filterung, wobei die Filterzone ein Filterbecken oder einen Filterbehälter aufweist, das bzw. der zumindest ein Filtermedium enthält, wobei die miteinander verbundenen Rohre zumindest eine durch die Filterzone zwischen einer Eintrittsstelle in die Filterzone und einer Austrittsstelle aus der Filterzone verlaufende, unverzweigte Rohrschleife bilden zum Beschicken der Filterzone mit dem zu filternden Wasser.

Es ist üblich, Wasser aus einem Nutzbereich, wie einem Schwimmteich oder einem Schwimmbecken, in einer örtlich vom Nutzbereich getrennten Filterzone oder einer im Nutzungsbereich (Bodenfilter) oder am Rande des Nutzungsbereiches im gleichen Becken ohne Abtrennung angeordneten Filterzone aufzubereiten. Die Filterzone weist einen Filterbehälter oder ein Filterbecken auf, der bzw. das mit Filtermaterial befüllt ist und von unten nach oben durchströmt wird. Bei der Filtration werden zumeist mehrere Aufbereitungsmechanismen gleichzeitig wirksam. Es wirkt neben einer mechanischen Filtration, bei welcher Partikel und Schwebstoffe aus dem Wasser entfernt werden, eine biologische Filtration, deren Prinzip auf der Bildung eines Biofilms beruht, welcher für den Abbau von organischen Verunreinigungen und die Bindung von organischen und anorganischen Nährstoffen im zu filternden Wasser sorgt. Zusätzlich oder alternativ dazu kann, je nach Zusammensetzung des Filtersubstrates, eine mineralische bzw. chemische Bindung von anorganischen Nährstoffen erfolgen, wie z.B. die Bindung von Phosphaten an Eisenoxid oder unter Apatitbildung an kalziumhaltige und oder magnesiumhaltige Mineralien wie Dolomit.

Unabhängig von der Wirkungsweise der Aufbereitung ist es wichtig, eine gleichmäßige Anströmung des gesamten Filtermaterials zu gewährleisten. Ist dies nicht sichergestellt, so kommt es zur Sedimentbildung in bestimmten Bereichen der Filterschüttung. Ablagerungen häufen sich meist dort, wo die geringsten Strömungsgeschwindigkeiten auftreten, wobei mehr Ablagerungen lokal auch mehr Sauerstoffzehrung bedeuten. Bei einer geringen Anströmung ist auch die Sauerstoffversorgung des Filtermaterials geringer. Nachdem Ablagerungen selbst eine weitere Anströmung verringern, entstehen noch mehr Ablagerungen, es wird noch weniger Sauerstoff angeliefert und gleichzeitig auch mehr Sauerstoff verbraucht. Dadurch, dass Biomasse unter Sauerstoffmangelbedingungen abgebaut wird, kommt es zu einer Anreicherung von Nitrit. Ist ausreichend Sauerstoff vorhanden, so entsteht durch Oxidation von Stickstoffverbindungen ungiftiges Nitrat. Nitrit hingegen ist ein starkes Bakterizid und führt zum Absterben des Biofilms und zum Krüppelwuchs von Pflanzen, welche im Filter wurzeln. Die Nährstoffe werden nicht weiter gebunden, sondern aus dem Filter freigesetzt, was zu Algenbildung und Belagsbildung im Nutzbereich führt. Auch mineralisch bzw. chemisch gebundene Phosphate können bei Sauerstoffmangel wieder in Lösung gehen. So löst sich an Eisenoxid gebundenes Phosphat dadurch, dass unlösliches dreiwertiges Eisen zu löslichem zweiwertigem Eisen reduziert wird, wobei auch das daran gebundene Phosphat in Lösung geht. Bei dem als Hydroxyapatit an Kalzium gebundenen Phosphat wirkt das mit der Anreicherung von Kohlendioxid in schlecht durchstömten Bereichen einhergehende Absinken des pH Wertes lösend. Aus all diesen Gründen ist es nötig, bei der mechanischen/ biologischen/ mineralischen/ chemischen Aufbereitung eine gleichmäßige Anströmung des gesamten Filtermaterials sicher zu stellen. Dem Verteilsystem kommt daher eine sehr wichtige Aufgabe zu, welche für die Funktionsfähigkeit des Filtersystems entscheidend ist.

Es ist üblich, das zu filternde Wasser in mit Löchern versehene Drainagerohre zu pumpen, die am Boden der Filterzone positioniert werden, bevor die Filterschüttung eingebracht wird, und welche endseitig geschlossen sind. In der Praxis beschädigt oft schon das auf die Rohre geschüttete Filtermaterial die Rohre oder drückt diese zusammen, wodurch die Filterleistung erheblich beeinträchtigt wird. Verstopfen zudem die Löcher in den Rohren durch Ablagerungen, ist kaum noch eine Filterung möglich. Ein Wiederherstellen einer ordnungsgemäßen Filterung erfordert das Entfernen der Filterschüttung und den Austausch der Rohre.

Ein Verteilsystem der eingangs genannten Art ist aus der EP 0 169 620 A1 bekannt. Bei dieser Vorrichtung sind gelochte Rohrleitungen aus aneinandergereihten und zusammengesetzten Rohrstücken vorgesehen. EP2230213A offenbart eine Vorrichtung zur Reinigung von Wasser aus Schwimmbecken oder Teichen mit einem Filterbehälter, welcher einen Transportbehälter bildet, zu welchem bodenseitig ein an einen Zulauf für zu reinigendes Wasser angeschlossener Verteiler gehört, welcher als Verteilerspinne mit über den Transportbehälterboden verteilt angeordneten Eintrittsöffnungen für zu reinigendes Wasser ausgeführt ist Diese Verteilerspinne umfasst einen zentralen Verteilerast, von dem quer Eintragsäste abragen, welche die Eintrittsöffnungen aufweisen.

Aus der AT 506 483 B1 ist eine Wassereinleitungsanordnung zur Wassereinleitung von zu filterndem Wasser in einen Bodenfilter bekannt, welche eine Wasseraustrittseinrichtung aufweist, die zumindest einen Durchbruch zur Einleitung des zu filternden Wassers in eine Verteilschicht des Bodenfilters aufweist. Zur im Wesentlichen gleichmäßigen Durchströmung des Filtermaterials des Bodenfilters umfasst die Wassereinleitungsanordnung eine Stauplatte zum wenigstens bereichsweisen Umlenken des aus der Wasseraustrittseinrichtung austretenden und zu filternden Wassers. Diese bekannte Anordnung ist jedoch ebenfalls, sobald sich Sedimente und Ablagerungen gebildet haben, die eine gleichmäßige Durchströmung beeinträchtigen, nur durch einen aufwendigen Ausbau aus dem Filter zu reinigen.

Im Gebrauchsmuster DE 299 01 537 U1 ist eine symmetrisch verzweigte Wasserverteilung mit mindestens zwei hintereinander geschalteten Verzweigungsanordnungen offenbart, welche an den Enden geschlitzte Verteilerrohre beschickt. Auch diese Verteilungsanordnung kann im Falle einer Verstopfung nicht gereinigt werden ohne die Filterschüttung zu entfernen.

Der Erfindung liegt die Aufgabe zugrunde, ein Verteilsystem der eingangs genannten Art zur Verfügung zu stellen, welches eine gleichmäßige Anströmung des Filtermaterials gewährleistet und eine effektive und einfach handzuhabende Möglichkeit der Reinigung des Verteilsystems ohne dessen Ausbau aus der Filterzone sicherstellt.

Gelöst wird die gestellte Aufgabe erfindungsgemäß dadurch, dass das Verteilsystem aus die Rohre enthaltenden Modulen zusammengesetzt ist, die sich voneinander in der Rohrführung unterscheiden, wobei die Rohre im verbundenen Zustand zumindest eine die Module durchlaufende Rohrschleife bilden.

Dadurch, dass die Rohrleitungen in einem erfindungsgemäßen Verteilsystem schleifenartig in der Filterzone verlaufen und diese Rohrschleife wieder aus der Filterzone austritt, wird die Möglichkeit einer sehr effektiven und einfachen Reinigung geboten, indem an dem einen Rohrende der Rohrschleife Wasser und/oder Luft unter hohem Druck zugeführt wird und das zweite Rohrende der Rohrschleife offen gehalten wird. Durch den unverzweigten Aufbau des Verteilsystems unter der Schüttung wird auch die effektive Anwendung von Reinigungschemikalien (z.B. Salzsäure, Zitronensäure, Essigsäure, Wasserstoffperoxid, Chlor etc.) oder die mechanische Reinigung mit Bürsten, Hochdruckdüsen etc. ermöglicht. Die abgelösten Verunreinigungen bzw. die Restchemikalien können zum Großteil über das zweite Rohrende ausgespült werden, so dass es zu keiner nennenswerten Kontamination der Filterschüttung bei der Reinigung kommt. Darüber hinaus bietet das Verteilsystem erstmals die Möglichkeit, mit dem vorhandenen Rohrsystem in einem Reinigungsvorgang auch Druckluft unter Wasser zu verteilen, wobei die aufsteigenden Luftblasen Sedimente und Biofilm vom Filtermaterial und aus den Zwischenräumen ablösen und mobilisieren, so dass diese abgesaugt werden können. Durch den modulartigen Aufbau bzw. das Zusammensetzen des Verteilsystems aus unterschiedlichen Modulen, die jeweils auf unterschiedliche Weise geführte Rohre enthalten, lassen sich beliebig gestaltete Filterzonen optimal über ein Rohrleitungssystem mit dem zu filternden Wasser beschicken. Module bieten darüber hinaus den Vorteil, die Rohre vor Beschädigungen durch die Filterschüttung bewahren zu können

Bei einer bevorzugten Ausführung des Verteilsystems ist bzw. sind die Rohrschleife(n) zu ihrer Eintrittsstelle in die Filterzone rückgeführt. Diese Massnahme vereinfacht die bauliche Ausführung des Verteilsystems mit Pumpenschächten und dergleichen.

Bei einer bevorzugten Ausführungsform der Erfindung sind in den miteinander verbundenen Modulen zwei Rohrschleifen gebildet, sodass das ins Verteilsystem eingeleitete Medium - bei Filterbetrieb das zu filternde Wasser - über einen entsprechend großen Rohrquerschnitt verteilt werden kann.

Die einzelnen Module weisen erfindungsgemäß ein flaches, die Rohre aufnehmendes Gehäuse mit einer Bodenplatte und einer Deckplatte und zumindest einer Seitenwand auf, welche mit Löchern versehen ist. Das Gewicht der Filterschüttung wird daher auf eine Fläche verteilt und wirkt nicht unmittelbar auf die Rohre. Die Gehäuse werden dabei vorteilhafterweise derart ausgeführt, dass die Module bündig aneinander anschließen, wenn die Rohre benachbart zu verlegender Module miteinander verbunden werden. Vorteilhaft ist daher eine Ausführung der Gehäuse als niedrige und quaderförmige Kassetten. Die alternative Ausführungsvariante des Verteilsystems ohne Kassetten erfordert den Einsatz von stabilen Rohrleitungen, welche durch die Schüttung nicht beschädigt werden.

Um Filterzonen unterschiedlicher Ausgestaltung optimal mit dem zu filternden Wasser beschicken zu können, sind insbesondere vier unterschiedliche Module vorgesehen, aus welchen unterschiedlich gestaltete Verteilsysteme variabel zusammengesetzt werden können, wobei innerhalb eines Verteilsystems nicht sämtliche vier unterschiedliche Module verwendet werden müssen. In manchen einfachen Filterzonen reicht die Verwendung von zwei Typen von Modulen in entsprechender Anzahl. Zu den erwähnten Modulen gehört ein Basismodul, welches geradlinig und parallel zueinander verlaufende Rohre enthält, ferner ein L-Winkelstückmodul, welcher L-förmig durch das Gehäuse verlaufende Rohre enthält und eine Umlenkung um 90 ° gestattet. Ein weiteres Modul ist ein T-Winkelstückmodul, welches zumindest zwei durch das Gehäuse gegensinnig L-förmig verlaufende Rohre und zumindest ein am T-Balken geradlinig durch das Gehäuse verlaufendes Rohr enthält. Das T-Winkelstückmodul gestattet eine Beschickung von Filterzonen mit Wasser, welche zwei unter 90 ° abzweigende Abschnitte aufweist. Ein weiteres Modul ist ein U-Winkelstückmodul mit zumindest einem U-förmig durch das Gehäuse verlaufenden Rohr. U-Winkelstückmodule bilden das letzte Modul bzw. die letzten Module in einem Verteilsystem. Bei der bevorzugten Ausführung der Module mit paarweise angeordneten und in zwei Paaren das jeweilige Modul durchlaufenden Rohren sind die zu jedem Modul erwähnten Rohre in entsprechender Anzahl - nämlich in zwei Paaren - in den Modulen vorhanden.

Das jeweils erste in der Filterzone positionierte Modul ist üblicherweise ein Basismodul, kann jedoch auch ein L-Winkelmodul oder ein T-Winkelmodul sein. Zumindest ein Rohrschleifenende - von einem Rohr aus einem Modul oder einer frei verlegten Rohrschleife - ist über eine Wanddurchführung mit zumindest einer außerhalb des Filterbeckens bzw. des Filterbehälters positionierten Pumpe oder einem Rohrsystem zur Beschickung mit dem aufzubereitenden Wasser oder zur Reinigung durch Spülung mit Wasser, Reinigungsflüssigkeit oder Druckluft lösbar verbindbar.

Um Sedimente vom Boden der Filterzone absaugen zu können, können in den Filterzonen zusätzlich zwischen den Modulen vertikal verlaufende Rohre, Schächte oder dergleichen, welche bis über die äußere Oberfläche des Filtermediums ragen, eingebracht sein.

Alternativ oder zusätzlich können zwischen den Modulen Absaugeinheiten eingebracht sein, welche horizontal am Boden liegende, geschlitzte oder mit Löchern versehene Rohre aufweisen, welche über Winkel- oder T-Stücke mit vertikal verlaufenden Rohren, die wiederum zumindest bis zur Oberfläche der Filtermedium ragen, verbunden sind. Auf diese Weise können beispielsweise durch eine Spülung des Verteilsystems mit Wasser oder Druckluft gelockerte Sedimente im Filtermaterial besonders effektiv durch Absaugen entfernt werden. Zur Vermeidung einer etwaigen Verkeimung von außen und um einen gewissen Durchfluss in diesen Rohren sicherzustellen, ist es vorteilhaft, wenn dies Rohre von außen wasserdicht verschließbar sind.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 bis Fig. 4 und Fig. 1a bis 4a Ansichten von Modulen eines erfindungsgemäßen Verteilsystems, Fig. 1 bis Fig. 4 Außenansichten, Fig. 1a bis 4a Ansichten mitsamt den innen verlaufenden Rohren, und
Fig. 5 bis Fig. 8 Ansichten von unterschiedlichen Einbauvarianten.

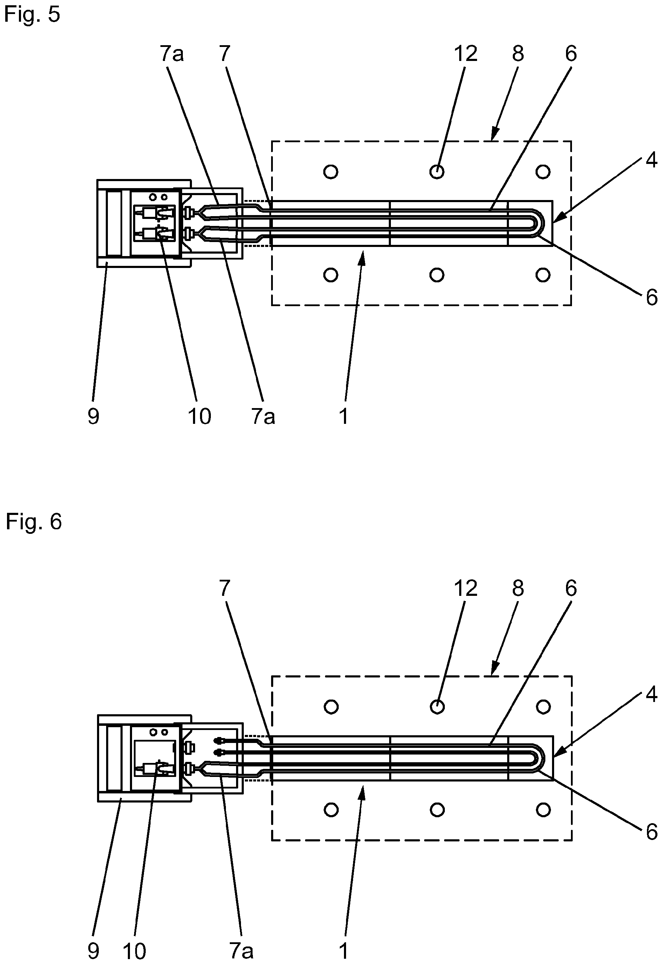

Das Verteilsystem gemäß der Erfindung dient zur Wassereinleitung von zu filterndem Wasser in einen vertikal von unten nach oben durchströmten Filter. Der Filter weist grundsätzlich einen Filterbehälter bzw. ein Filterbecken, beispielsweise aus einer Folie, Beton, Edelstahl oder einem anderen wasserdichten Material auf, welcher bzw. welches zumindest ein Filtermedium enthält bzw. mit zumindest einem Filtermedium befüllt ist. Zu den für eine vertikale Durchströmung geeigneten Filtermedien gehören partikuläre Filtermedien, wie Kies, Splitt, Sand, Zeolith, Eisenoxid und dergleichen, sowie insbesondere auch Mischungen aus diversen Schüttmaterialien. Der Filter kann auch aus einer Anzahl von Schichten aus unterschiedlichen Filtermedien aufgebaut sein, wobei im Sinne einer langfristig gleichmäßigen Durchströmung vorzugsweise alle geschichteten Filtermedien ähnliche Korngrößenverteilungen aufweisen sollen, so dass sich die Hydrodynamik im System nicht ändert wenn Schichten lokal durchmischt werden sollten. In der Beschreibung der Figuren 5 bis 9 ist der Bereich, der vom Filter eingenommen wird, als "Filterzone" 8 bezeichnet.

Das zu filternde Wasser stammt aus einem Swimmingpool, einem Schwimmteich, einem Naturpool oder dergleichen und wird von dort vorzugsweise mittels zumindest einer Pumpe, die beispielsweise in einem Pumpenskimmer untergebracht ist, abgepumpt und über das erfindungsgemäße Verteilsystem in den Filter gepumpt. Das an der Oberfläche des Filters austretende gefilterte Wasser läuft wieder in den Pool oder Teich bzw. wird in diesen rückgeleitet. In einer möglichen Anordnung kann das Filterbecken auch tiefer liegen als der Pool, so dass das Wasser durch den hydrostatischen Druck in das Verteilsystem gedrückt wird und erst nach der Filterpassage mittels Pumpen wieder in den Nutzungsbereich (Pool) hochgepumpt wird. Bei jeder der möglichen Ausführungen bzw. Anordnungen wird das Wasser in einem Kreislauf durch die Filterzone geleitet.

Bei der bevorzugten Ausführungsform der Erfindung setzt sich das Verteilsystem aus einer Anzahl von Modulen zusammen, wobei bei den dargestellten Ausführungsformen vier unterschiedliche Module 1 bis 4 vorhanden sind und verwendet werden. Sämtliche Module 1 bis 4 weisen ein flaches, im Wesentlichen quaderförmigen Gehäuse 5 mit einer rechteckigen Bodenplatte 5a, einer rechteckigen Deckplatte 5b und Seitenbereichen, die mit Seitenwänden 5c versehen sind, auf. Im und durch das Gehäuse 5 verlaufen in noch zu beschreibender Weise jeweils vier endseitig offene Rohre 6, die bei den dargestellten Modulen 1 bis 4 paarweise angeordnet sind und von im Gehäuse 5 vorgesehenen Halterungen gehalten sind. Der Abstand zwischen der Bodenplatte 5a und der Deckplatte 5b ist an den äußeren Rohrdurchmesser von einigen Zentimetern, insbesondere 4 cm, angepasst. An den Austrittsstellen der Rohre 6 aus dem Gehäuse 5 weisen in sämtlichen Modulen 1 bis 4 die Rohre 6 und die Rohrpaare gleiche gegenseitige Abstände auf, sodass die Rohre 6 der verschiedenen Module 1 bis 4 über Rohrmuffen 6a miteinander verbindbar sind. Der gegenseitige Abstand der Rohre 6 eines Rohrpaares beträgt von Rohrmitte zu Rohrmitte beispielsweise 6 cm, der gegenseitige Abstand der Rohrpaare beträgt zwischen den Mitten der einander benachbarten Rohre 6 der Rohrpaare beispielsweise 10 cm. Jedes Rohr 6 ist mit einer Anzahl von insbesondere gleichmäßig verteilten Löchern 6b versehen, deren Durchmesser insbesondere 3 mm bis 7 mm beträgt. In den Seitenwänden 5c der Gehäuse 5 sind weitere Löcher 5d ausgebildet, die bei den gezeigten Ausführungsformen schlitzartig ausgebildet sind und entlang einer Lochreihe verlaufen.

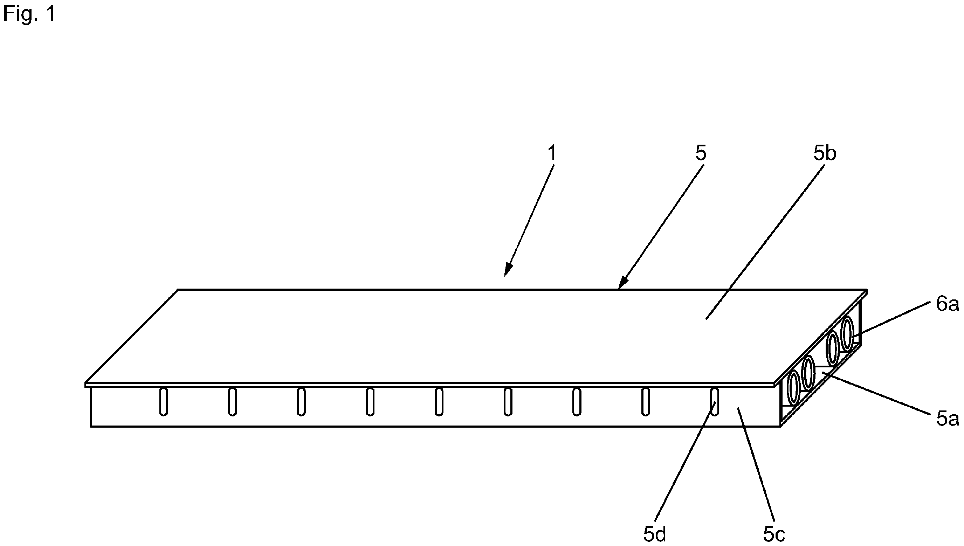

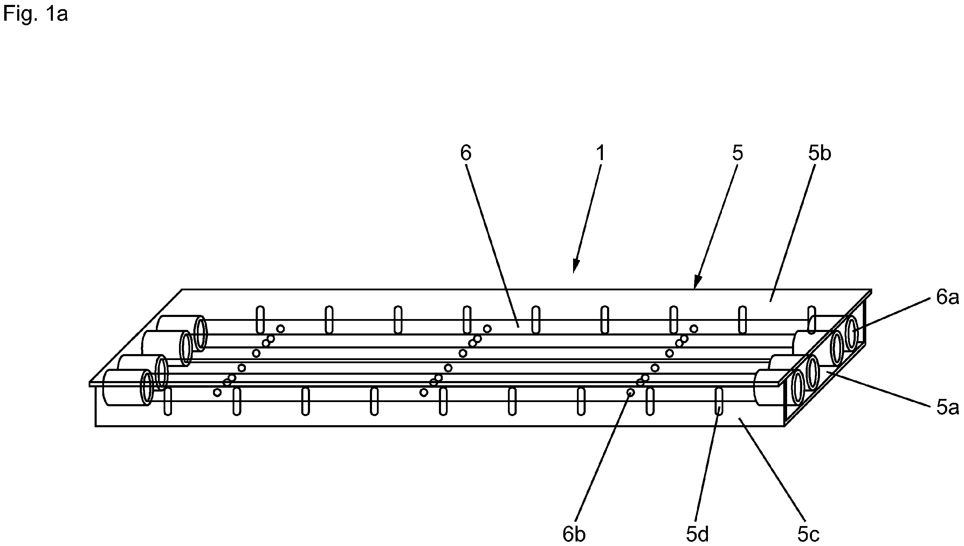

Fig. 1 und 1a zeigen ein Basismodul 1 mit einem länglichen Gehäuse 5, mit stirnseitigen Seitenwänden, an welchen die Rohre 6 mit ihren Rohrmuffen 6a nach aussen ragen, und mit zwei längsseitig verlaufenden Seitenwänden 5c mit Löchern 5d. Die Deckplatte 5b überragt geringfügig die längsseitigen Seitenwände 5c und ist daher etwas breiter als die Bodenplatte 5a. Im Gehäuse 5 verlaufen in seiner Längsrichtung parallel zueinander vier Rohre 6 in zwei Rohrpaaren.

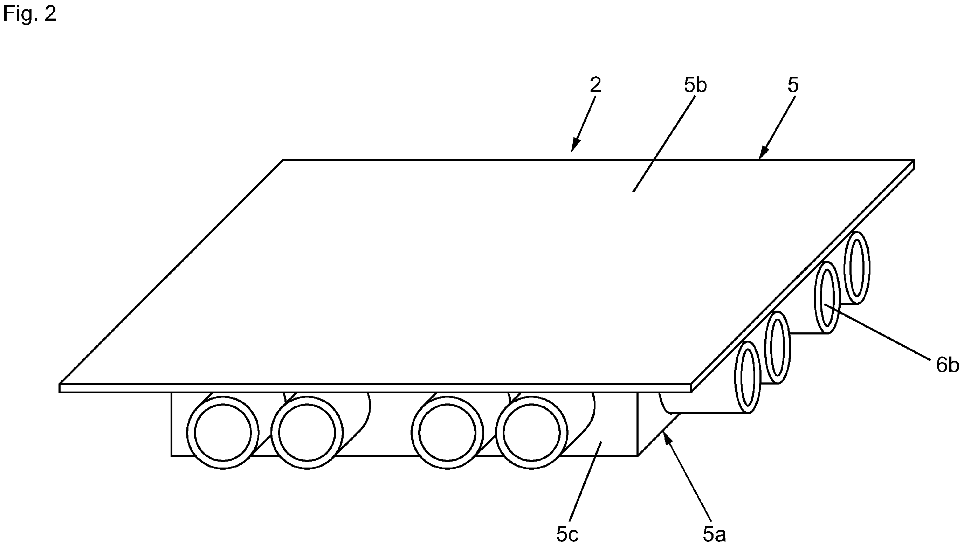

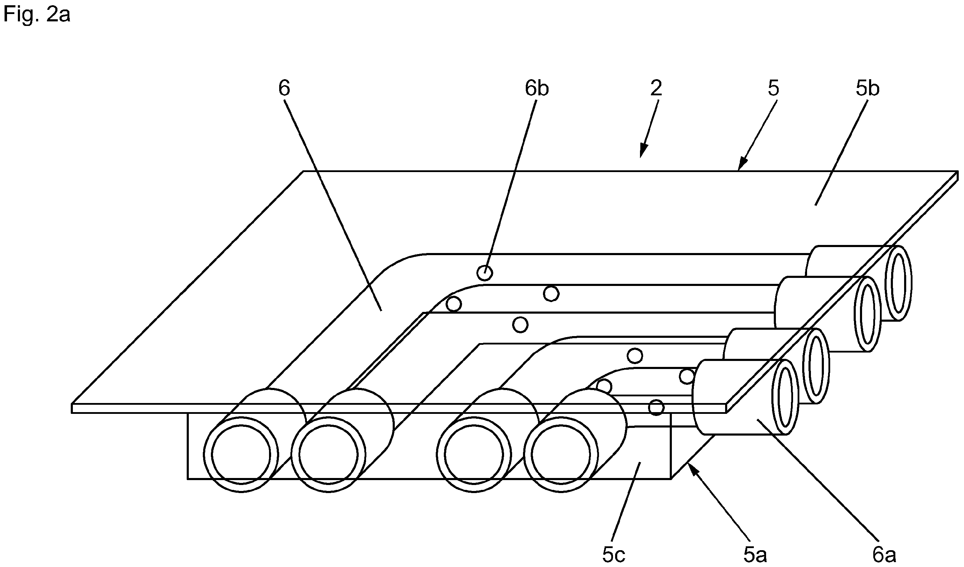

Fig. 2 und 2a zeigen ein L-Winkelstückmodul 2, wobei an zwei an einem Eck zusammenlaufenden und daher zueinander L-förmig verlaufenden Seitenwänden 5c Rohre 6 mit ihren Rohrmuffen 6a nach aussen ragen. Die jeweils paarweise angeordneten Rohre 6 verlaufen L-förmig durch das Gehäuse 5.

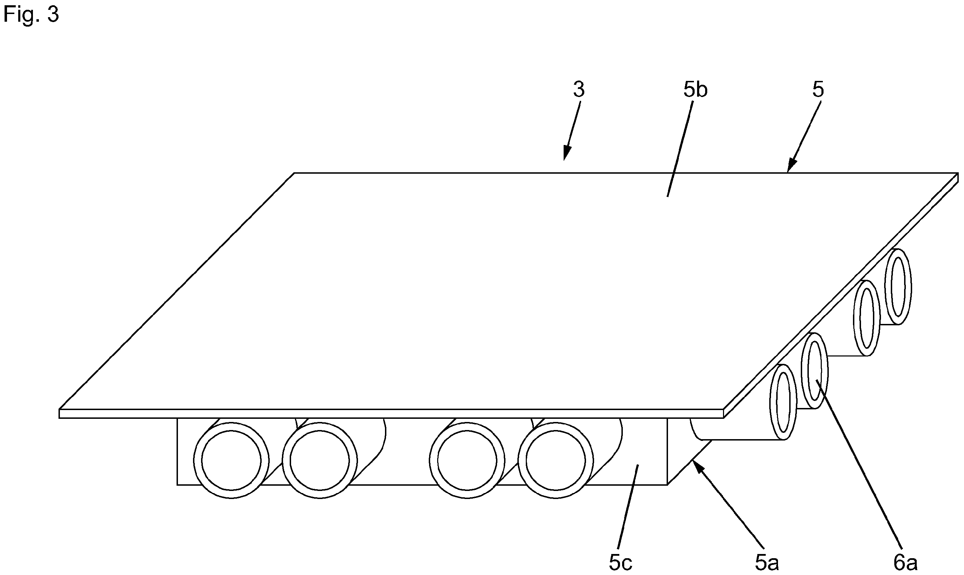

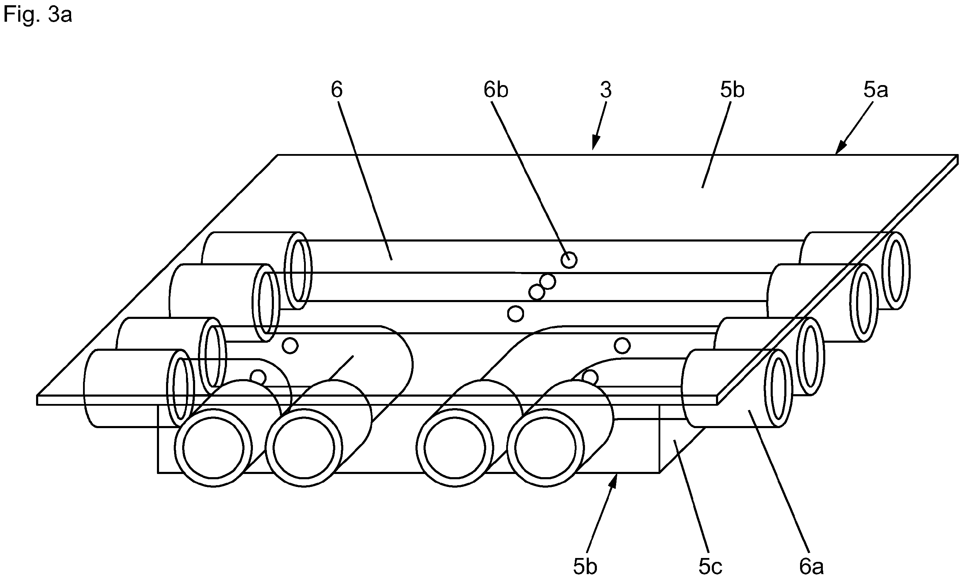

Fig. 3 und 3a zeigen ein T-Winkelstückmodul 3 mit drei Seitenwänden 5c, an welchen Rohre 6 mit Rohrmuffen 6a nach aussen ragen. Im Gehäuse 5 verlaufen zueinander gegensinnig und jeweils L-förmig zwei Rohrpaare aus jeweils zwei Rohren 6, der eine Rohrabschnitt senkrecht zu einer Seitenwand 5c und der zweite Rohrabschnitt - nach einer 90°-Biegung - parallel zu dieser Seitenwand 5c. Zwischen den beiden L-förmig verlaufenden Rohrpaaren und der gegenüberliegenden Seitenwand 5c verläuft parallel zu dieser durch das Gehäuse 5 ein weiteres Rohrpaar aus zwei Rohren 6. An den Austrittstellen aus dem Gehäuse 5 befinden sich daher jeweils zwei Rohrpaare unter den oben beschriebenen, gleichen gegenseitigen Abständen.

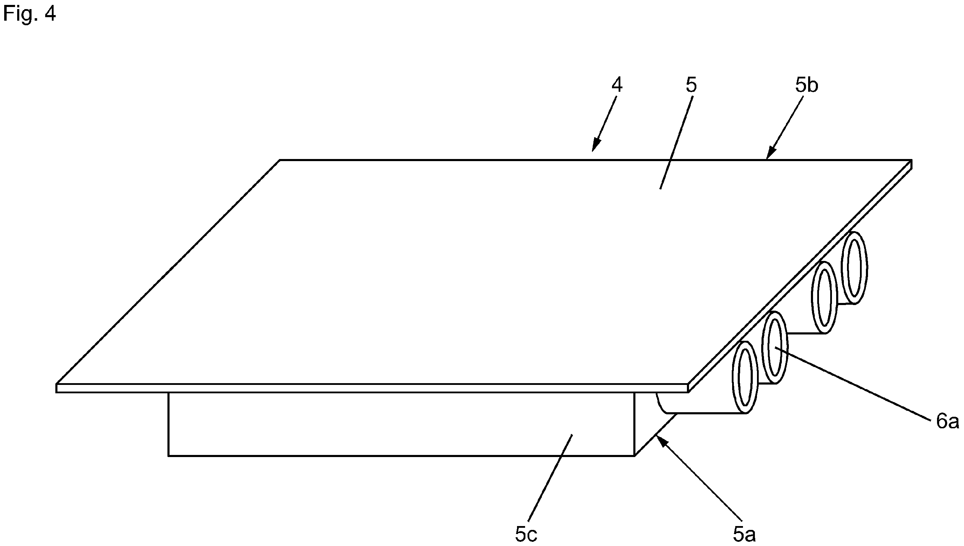

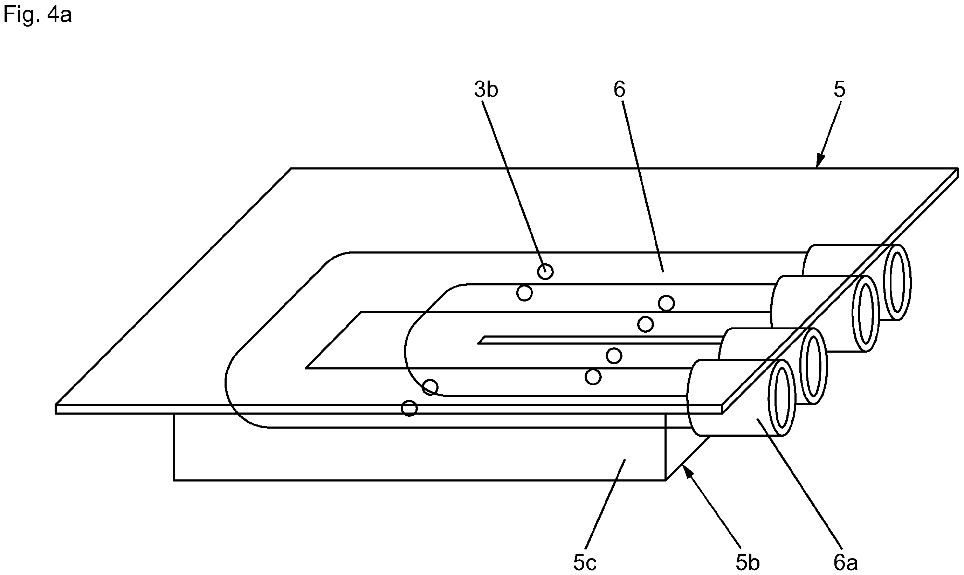

Fig. 4 zeigt ein U-Winkelstückmodul 4 mit einer Seitenwand 5c, aus welcher zwei Rohrpaare aus dem Gehäuse ragen. Im Gehäuse 5 verläuft ein Rohrpaar aus zwei Rohren 6 U-förmig durch das Gehäuse 5, sodass an ihrer Austrittstelle in zwei Paaren angeordnete Rohre 6 unter den beschriebenen gegenseitigen Abständen vorliegen.

Die Module 2, 3 und 4 weisen bei den gezeigten Ausführungsbeispielen quadratische Deckplatten 5b und Bodenplatten 5a auf, deren Seitenlängen der Breite der Deckplatte bzw. Bodenplatte des Basismoduls 1 entsprechen.

Die einzelnen Module 1 bis 4 sind auf vielfältige Weise zu einem Verteilsystem zusammenfügbar, wobei durch die Verwendung des U-Winkelstückmoduls 4 als letztes Modul immer zwei geschlossene, unverzweigte Rohrschleifen entstehen. Alternativ zur Verwendung des U-Winkelstückmoduls 4 als letztes Modul können mit den Modulen 1 bis 3 auch vier unverzweigte, parallele Rohrschleifen realisiert werden, welche mit ihren Enden mit einer Durchführung durch die Beckenwand geführt sind, so dass sämtliche Enden der Rohrschleifen für eine Reinigung zugänglich sind. Das Verbinden der Rohre 6 der Module 1 bis 4 erfolgt, wie erwähnt, über Rohrmuffen. Im zusammengesetzten Zustand schließen jeweils die Gehäuse 5 der Module 1 bis 4 bündig aneinander an, wodurch eine erhöhte mechanische Beständigkeit gegenüber dem Gewichtsdruck des Filtermaterials erreicht wird.

Fig. 5 bis 9 zeigen Ausführungsbeispiele von Verteilsystemen, die aus zumindest zwei Typen von Modulen 1 bis 4 zusammengesetzt sind. Das Verteilsystem wird jeweils am Boden der Filterzone 8, bevor das Filtermedium aufgebracht wird, positioniert bzw. eingebaut. Fig. 5 zeigt eine Draufsicht auf eine rechteckige Filterzone 8, deren Verteilsystem zwei Basismodule 1 und ein U-Winkelstückmodul 4 aufweist. Die Rohre 6 der beiden Basismodule 1 werden miteinander und die Rohre 6 des U-Winkelstückmoduls 4 mit den Rohren 6 des einen Basismoduls 1 verbunden. Seitlich am Filterbecken ist eine Wanddurchführung 7 eingebaut, beispielsweise als 4-fach-Flanschdurchführung mit vier Rohren und Anschlussmuffen zum Anschluss an Verbindungsrohre 7a. Je zwei Verbindungsrohre 7a werden von einer im Pumpenskimmer 9 untergebrachten Pumpe 10 mit dem zu filternden Wasser versorgt. Jede Pumpe 10 beschickt daher ein Rohrpaar mit Wasser. Die äußeren Rohre 6 und die inneren Rohre 6 verlaufen daher jeweils entlang einer Schleife bezüglich ihres Beginnes bei der Wanddurchführung 7 bzw. der Wassereintrittsstelle in die Filterzone 8 und innerhalb des Verteilsystems. Der Pumpenskimmer 9 kann über einen Anbauschacht verfügen, in welchem die Verbindung der Pumpen 9 zur Wanddurchführung 7 erfolgt. Im Betrieb wird in sämtliche vier Rohre 6 des Verteilsystems Wasser gepumpt, welches aus den Bohrungen in den Rohren 6 und durch die Öffnungen 5d in den Gehäusen 5 in das Filtermaterial gelangt und durch dieses hindurch nach oben sickert. Um eine optimale Beschickung der Filterzone 8 mit dem zu filternden Wasser zu gewährleisten, soll - sofern der Überdruck in den Verteilrohren im Sinne einer energieoptimierten Verteilung niedrig gehalten werden soll - die Summe der Flächen der in den Rohren 6 eines Rohrpaares des Verteilsystems vorgesehen Löcher die Austrittsquerschnittsflächen der Pumpen 9 nicht übersteigen.

Fig. 6 zeigt eine Abwandlung der in Fig. 5 dargestellten Ausführung mit nur einer Pumpe 9. Die Enden der Rohre 6 des einen Rohrpaares, das sind die Enden der schleifenartig rückgeführten Rohre 6, sind in diesem Fall verschlossen, werden jedoch soweit aus der Filterschüttung herausgeführt, dass eine freie Zugänglichkeit gewährleistet ist.

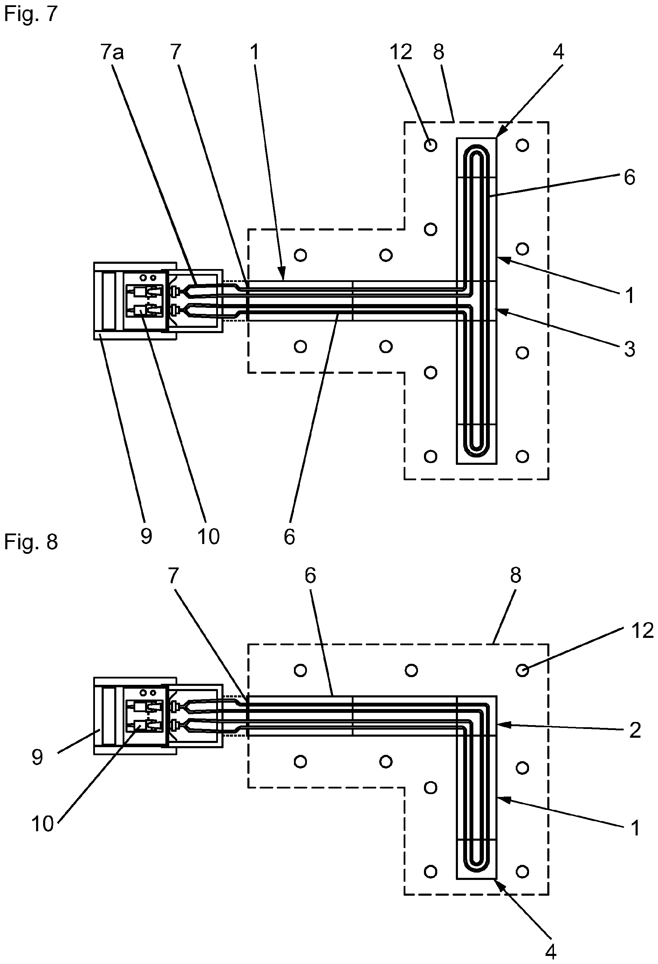

Bei den in Fig. 7 bis 9 gezeigten Ausführungsvarianten ist jeweils ein Pumpenskimmer 9 mit zwei Pumpen 10 vorgesehen, die die vier Rohre 6 im jeweiligen Verteilsystem mit Wasser beschicken.

Fig. 7 zeigt eine Ausführungsvariante einer in Draufsicht etwa T-förmigen Filterzone 8. Das Verteilsystem ist beispielhaft aus zwei Basismodulen 1, einem T-Winkelstückmodul 3 am "Querbalken" des T der Filterzone 8, einem beidseitig des T-Winkelstückmoduls 3 anschließenden Basismodul 1 und endseitigen U-Winkelstückmodulen 4 zusammengesetzt. Die miteinander verbundenen Rohre 6 bilden zwei die T-förmige Filterzone durchlaufende Rohrschleifen, die bei der Wanddurchführung 7 beginnen und enden.

Fig. 8 zeigt eine Ausführungsvariante einer in Draufsicht etwa L-förmigen Filterzone 8, in welcher ein gemäß der Form der Filterzone 8 L-förmig verlaufendes Verteilsystem verlegt ist, welches, beginnend bei der Wanddurchführung 7, zwei Basismodule 1, ein L-Winkelstückmodul 2 und im zweiten "Schenkel" der L-förmigen Filterzone 8 ein weiteres Basismodul 1 und ein U-Winkelstückmodul 4 aufweist. Die außen- und die innenseitig verlaufenden Rohre 6 bilden L-förmig verlaufende Rohrschleifen.

In einer nicht abgebildeten Ausführungsvariante weist eine Filterzone im Wesentlichen eine U-Form auf, wobei das Verteilsystem in jedem Schenkel des U zwei Basismodule 1, die jeweils durch ein L-Winkelstückmodul 2 miteinander in Verbindung sind, und endseitig ein U-Winkelstückmodul 4 aufweist. Die innen- und die außenseitig verlaufenden Rohre 6 bilden U-förmig verlaufende Rohrschleifen.

Je nach Auslegung bzw. Ausdehnung des Verteilsystems bezüglich der Anzahl der zu beschickenden Module kann analog zu Fig. 6 auch nur eine Pumpe 9 vorgesehen sein. Bei einer nicht dargestellten Ausführungsvariante der Erfindung ist es auch möglich, jedes Rohr einzeln über eine Pumpe 9 mit dem zu filternden Wasser zu beschicken.

Erfindungsgemäße Verteilsysteme gestatten eine sehr gleichmäßige Verteilung des Wassers in der Filterzone und daher auch eine sehr gleichmäßige Durchströmung des Filtermediums im Filter. Im Laufe der Zeit kommt es jedoch im Filtermedium unweigerlich zur Bildung von Sedimenten und Ablagerungen, welche eine gleichmäßige Durchströmung beeinträchtigen. Auch Pflanzenwurzeln, welche versuchen, dem Wasserstrom entgegenzuwachsen und gleichzeitig Seitenwurzeln treiben, helfen mit, die Wasserverteilung im Filtermedium zu behindern, indem sie beispielsweise in die Rohrlöcher hineingelangen. Ein erfindungsgemäß ausgeführtes Verteilsystem bietet umfangreiche Reinigungsmöglichkeiten. Dazu wird bei abgeschalteten Pumpen 10 die Verbindung der Pumpen 10 zum Verteilsystem im Pumpenskimmer 9 gelöst und das eine Rohr 6 der jeweiligen Rohrschleife(n) an eine separate, kräftigere Pumpe (Hochdruckpumpe) angeschlossen, um eine Spülung der Rohre 6 durchzuführen. Durch die Anordnung der Rohre 6 als Rohrschleife tritt der gelöste Schmutz am zweiten Ende der Rohrschleife aus. Ohne die Module entfernen zu müssen kann daher beispielsweise eine Spülung des Verteilsystems mit Wasser und Druckluft erfolgen, wobei Wasser mit kalklösenden Zusätzen, wie Essig, Salzsäure oder Zitronensäure, verwendet werden kann. Eisenablagerungen können unter Zugabe von Zitronensäure, Salzsäure oder Oxalsäure zum Spülwasser entfernt werden. Wird dem Spülwasser Wasserstoffperoxid zugesetzt, so können auch störende Ablagerungen von Biofilm entfernt werden. Darüber hinaus ist auch die Anwendung von heißem Wasser, hohem Druck und schließlich auch eine mechanische Reinigung der Rohre 6 mittels Rohrbürsten und dergleichen möglich. Die Rohre 6 können zudem auch mit einer speziellen Kanalkamera befahren werden.

Ausgehend von der benötigten Filterleistung in sogenannten Personenäquivalenten (durchschnittlicher Phosphoreintrag von 100mg pro Person und Tag) kann die für die jeweilige Filterzone erforderliche Filterkapazität bestimmt werden. Für ein definiertes Filtermaterial ergibt sich daraus dessen notwendige Kubatur, welche wiederum eine definierte Oberfläche für den Wuchs von Biofilm bietet. Abhängig von der Filtergeometrie wird, um die erforderliche Filterleistung zu erbringen, eine bestimmte Anströmung des Verteilsystems über die Pumpe(n) sichergestellt. Das erfindungsgemäße Verteilsystem wird daher entsprechend der Beschickung ausgelegt, um zuverlässig das zu filternde Wasser auf die gesamte Fläche der Filterzone zu verteilen.

In den Filterzonen 8 können zusätzlich senkrecht zum Boden der Filterzonen 8 verlaufend jeweils mehrere Wartungsrohre 12 eingebracht werden, die es gestatten, Sedimente vom Boden der Filterzone 8 abzusaugen. So können beispielsweise durch eine Spülung des Verteilsystems mit Wasser und Druckluft Sedimente im Filtermaterial gelockert werden, die sich im Bereich des Bodens sammeln und schließlich über die Wartungsrohre 12 entfernt werden können. Bei einer alternativen Ausführung können an Stelle der Wartungsrohre 12 in den Bereichen zwischen den Modulen horizontal verlaufende geschlitzte Absaugrohre verlegt werden, welche mit Winkel- oder T-Stücken an vertikal verlaufende Absaugrohre angebunden werden, über welche die gelockerten Sedimente abgesaugt werden können.

Es ist ferner möglich, die Module mit nur einem Rohrpaar zu versehen - abgesehen vom T-Winkelstückmodul mit drei Rohren - sodass im zusammengebauten Zustand im Verteilsystem eine einzige Rohrschleife gebildet ist.

Des Weiteren ist es möglich, die Rohrschleife(n) nicht bei der Eintrittsstelle in das Filterbecken aus diesem austreten zu lassen, sondern an anderer Stelle.

### Bezugsziffernliste

- 1: Basismodul
- 2: L-Winkelstück-Modul
- 3: T-Winkelstück-Modul
- 4: U-Winkelstück-Modul
- 5: Gehäuse
- 5a: Bodenplatte
- 5b: Deckplatte
- 5c: Seitenwand
- 5d: Öffnung
- 6: Rohr
- 6a: Rohrmuffe
- 6b: Loch
- 7: Wanddurchführung
- 7a: Verbindungsrohr
- 8: Filterzone
- 9: Pumpenskimmer
- 10: Pumpe
- 12: Wartungsrohr

## Patentansprüche

1. Verteilsystem mit mit Löchern versehenen, zusammenfügbaren Rohren (6) zur Einleitung von aus Schwimmteichen oder Schwimmbecken stammendem Wasser in eine Filterzone (8) zur mechanischen, und/oder biologischen und/oder mineralischen bzw. chemischen Filterung, wobei die Filterzone (8) ein Filterbecken oder einen Filterbehälter aufweist, das bzw. der zumindest ein Filtermedium enthält, wobei die miteinander verbundenen Rohre (8) zumindest eine durch die Filterzone (8) zwischen einer Eintrittsstelle in die Filterzone (8) und einer Austrittsstelle aus der Filterzone (8) verlaufende, unverzweigte Rohrschleife bilden zum Beschicken der Filterzone (8) mit dem zu filternden Wasser,
**dadurch gekennzeichnet,**
**dass** Verteilsystem aus die Rohre (6) enthaltenden Modulen (1, 2, 3, 4) zusammengesetzt ist, die sich voneinander in der Rohrführung unterscheiden, wobei die Rohre (6) im verbundenen Zustand zumindest eine die Module (1, 2, 3, 4) durchlaufende Rohrschleife bilden.

2. Verteilsystem nach Anspruch 1, **dadurch gekennzeichnet, dass** die Rohrschleife(n) zu ihrer Eintrittsstelle in die Filterzone (8) rückgeführt ist bzw. sind.

3. Verteilsystem nach Anspruch 1 oder 2, **dadurch gekennzeichnet, dass** die Rohre (6) bzw. die miteinander verbundenen Module (1, 2, 3, 4) zumindest zwei, zumindest im Wesentlichen parallel verlaufende Rohrschleifen bilden.

4. Verteilsystem nach einem der Ansprüche 1 bis 3 **dadurch gekennzeichnet, dass** jedes Modul (1, 2, 3, 4) ein flaches, die Rohre (6) aufnehmendes Gehäuse (5) mit einer Bodenplatte (5a), einer Deckplatte (5b) und zumindest einer Seitenwand (5c) aufweist, welche mit Löchern (5d) versehen ist.

5. Verteilsystem nach einem der Ansprüche 1 bis 4, **dadurch gekennzeichnet, dass** ein Modul ein Basismodul (1) ist, welches geradlinig und parallel zueinander verlaufende Rohre (6) enthält.

6. Verteilsystem nach einem der Ansprüche 1 bis 4, **dadurch gekennzeichnet, dass** ein Modul ein L-Winkelstückmodul (2) ist, welches L-förmig durch das Gehäuse (5) verlaufende Rohre (6) enthält.

7. Verteilsystem nach einem der Ansprüche 1 bis 4, **dadurch gekennzeichnet, dass** ein Modul ein T-Winkelstückmodul (3) ist, welches zumindest zwei durch das Gehäuse (5) gegensinnig L-förmig verlaufende Rohre (6) und zumindest ein am T-Balken geradlinig durch das Gehäuse (5) verlaufendes Rohr (6) enthält.

8. Verteilsystem nach einem der Ansprüche 1 bis 4, **dadurch gekennzeichnet, dass** ein Modul ein U-Winkelstückmodul (4) mit zumindest einem U-förmig durch das Gehäuse (5) verlaufenden Rohr (6) ist.

9. Verteilsystem nach einem der Ansprüche 1 bis 8, **dadurch gekennzeichnet, dass** die Rohre (6) in den Modulen (1, 2, 3, 4) in Paaren verlaufend angeordnet sind.

10. Verteilsystem nach einem der Ansprüche 1 bis 9, **dadurch gekennzeichnet, dass** zumindest ein Rohrschleifenende über eine Wanddurchführung (7) mit zumindest einer Pumpe (9) oder einem Rohrsystem zur Beschickung mit dem aufzubereitenden Wasser oder zur Reinigung durch Spülung mit Wasser, Reinigungsflüssigkeit oder Druckluft lösbar verbindbar ist.

11. Verteilsystem nach einem der Ansprüche 1 bis 10, **dadurch gekennzeichnet, dass** zwischen den Modulen (1 bis 4) vertikal verlaufende Rohre (12) oder Schächte, welche bis über die äußere Oberfläche des Filtermediums ragen, eingebracht sind.

12. Verteilsystem nach einem der Ansprüche 1 bis 11, **dadurch gekennzeichnet dass** zwischen den Modulen (1 bis4) Absaugeinheiten eingebracht sind, welche horizontal am Boden liegende, geschlitzte oder mit Löchern versehene Rohre aufweisen, welche über Winkel- oder T-Stücke mit vertikal verlaufenden Rohren, welche zumindest bis zur Oberfläche des Filtermediums ragen, verbunden sind.

13. Verteilsystem nach Anspruch 12, **dadurch gekennzeichnet, dass** die Enden der vertikal verlaufenden Rohre wasserdicht verschliessbar sind.

## Claims

1. Distribution system with tubes (6) which can be joined together and are provided with holes to carry water from swimming ponds or swimming pools into a filter zone (8) for mechanical and/or biological and/or mineral or, as the case may be, chemical filtering, wherein the filter zone (8) has a filter basin or a filter container containing at least one filter medium, wherein the interconnected tubes (8) form at least one unbranched pipe loop running at least through the filter zone (8) between an inlet point into the filter zone (8) and an outlet point out of the filter zone (8) to provide the filter zone (8) with the water to be filtered,
**characterised in that**,
the distribution system is composed of the modules (1, 2, 3, 4) containing tubes (6), said modules differing from each other in how the tubes are routed, wherein the tubes (6) in the connected state form at least one tube loop running through the modules (1, 2, 3, 4).

2. Distribution system according to claim 1, **characterised in that** the tube loop(s) is/are returned back to its/their inlet point into the filter zone (8).

3. Distribution system according to claim 1 or 2, **characterised in that** the tubes (6) or, respectively, the interconnected modules (1, 2, 3, 4) form at least two tube loops running substantially parallel.

4. Distribution system according to any one of claims 1 to 3 **characterised in that** each module (1, 2, 3, 4) has a flat housing (5) accommodating the tubes (6) with a base plate (5a), a cover plate (5b) and at least one side wall (5c) which is provided with holes (5d).

5. Distribution system according to any one of claims 1 to 4, **characterised in that** a module is a basic modul (1) which contains tubes (6) running linearly and parallel to each other.

6. Distribution system according to any one of claims 1 to 4, **characterised in that** a module is an L-shaped angular module (2) which contains tubes (6) running in an L-shape through the housing (5).

7. Distribution system according to any one of claims 1 to 4, **characterised in that** a module is a T-shaped angular module (3), which contains at least two tubes (6) running though the housing (5), the L-shapes being in opposite directions and at least one tube (6) running linearly through the housing (5) as a cross piece of the T.

8. Distribution system according to any one of claims 1 to 4, **characterised in that** a module ist a U-shaped angular module (4) with at least one tube (6) running in the shape of a U through the housing (5).

9. Distribution system according to any one of claims 1 to 8, **characterised in that** the tubes (6) are disposed in the modules (1, 2, 3, 4) running in pairs.

10. Distribution system according to any one of claims 1 to 9, **characterised in that** at least one tube loop end can be connected detachably through a wall duct (7) with at least one pump (9) or a tube system for delivering the water to be processed or to be cleaned by flushing with water, cleaning fluid or compressed air.

11. Distribution system according to any one of claims 1 to 10, **characterised in that** tubes (12) running vertically between the modules (1 to 4), or shafts projecting beyond the external surface of the filter medium, are introduced.

12. Distribution system according to any one of claims 1 to 11, **characterised in that** suction units are introduced between the modules (1 to 4), having tubes lying horizontally on the base and which are slotted or provided with holes, which are connected by means of angle pieces or T-pieces with vertically running tubes, which project at least to the surface of the filter medium.

13. Distribution system according to claim 12, **characterised in that** the ends of the vertically running tubes can be closed so that they are water-tight.

## Revendications

1. Système de répartition avec des tubes (6) assemblables, prévus avec des trous pour l'amenée d'eau provenant d'étangs de baignade ou de piscines dans une zone de filtrage (8) pour un filtrage mécanique et/ou biologique et/ou minéral ou chimique, la zone de filtrage (8) présentant un bassin filtrant ou une cuve filtrante qui comprend au moins un milieu filtrant, les tubes (8) raccordés les uns aux autres formant une boucle tubulaire non ramifiée, s'étendant par la zone de filtrage (8) entre un point d'entrée dans la zone de filtrage (8) et un point de sortie de la zone de filtrage (8), boucle destinée à alimenter la zone de filtrage (8) avec l'eau à filtrer,
**caractérisé en ce que**
le système de répartition est composé de modules (1, 2, 3, 4) comprenant les tubes (6) qui se différencient les uns des autres dans le passage de tubes, les tubes (6) formant à l'état raccordé au moins une boucle tubulaire traversant les modules (1, 2, 3, 4).

2. Système de répartition selon la revendication 1, **caractérisé en ce que** la(les) boucles(s) tubulaire(s) est(sont) reconduite(s) à son (leur) point d'entrée dans la zone de filtrage (8).

3. Système de répartition selon la revendication 1 ou 2, **caractérisé en ce que** les tubes (6) ou les modules raccordés entre eux (1, 2, 3, 4) forment au moins deux boucles tubulaires, au moins essentiellement parallèles.

4. Système de répartition selon l'une quelconque des revendications 1 à 3, **caractérisé en ce que** chaque module (1, 2, 3, 4) présente un boîtier (5) plat logeant les tubes (6) avec une plaque de fond (5a), une plaque de recouvrement (5b) et au moins une paroi latérale (5c) qui est pourvue de trous (5d).

5. Système de répartition selon l'une quelconque des revendications 1 à 4, **caractérisé en ce qu'**un module est un module de base (1) qui contient des tubes (6) s'étendant de manière rectiligne et parallèle les uns par rapport aux autres.

6. Système de répartition selon l'une quelconque des revendications 1 à 4, **caractérisé en ce qu'**un module est un module de pièce angulaire en L (2) qui contient des tubes (6) s'étendant en forme de L à travers le boîtier (5).

7. Système de répartition selon l'une quelconque des revendications 1 à 4, **caractérisé en ce qu'**un module est un module de pièce angulaire en T (3) qui comprend au moins deux tubes (6) s'étendant en forme de L en sens opposé à travers le boîtier (5) et au moins un tube (6) s'étendant de manière rectiligne sur la poutre en T à travers le boîtier (5).

8. Système de répartition selon l'une quelconque des revendications 1 à 4, **caractérisé en ce qu'**un module est un module de pièce angulaire en U (4) avec au moins un tube (6) s'étendant en forme de U à travers le boîtier (5).

9. Système de répartition selon l'une quelconque des revendications 1 à 8, **caractérisé en ce que** les tubes (6) sont disposés s'étendant par paires dans les modules (1, 2, 3, 4).

10. Système de répartition selon l'une quelconque des revendications 1 à 9, **caractérisé en ce qu'**au moins une extrémité de boucle tubulaire peut être reliée de manière amovible par un passage mural (7) à au moins une pompe (9) ou un système tubulaire pour l'alimentation en eau à traiter ou pour le nettoyage en rinçant avec de l'eau, avec du liquide nettoyant ou de l'air comprimé.

11. Système de répartition selon l'une quelconque des revendications 1 à 10, **caractérisé en ce que** des tubes (12) ou des puits s'étendant verticalement et dépassant la surface extérieure du milieu filtrant sont disposés entre les modules (1 à 4).

12. Système de répartition selon l'une quelconque des revendications 1 à 11, **caractérisé en ce qu'**entre les modules (1 à 4) sont disposées des unités d'aspiration qui présentent des tubes fendus ou dotés de trous disposés à l'horizontale sur le sol, tubes qui sont raccordés à des tubes s'étendant verticalement par des pièces angulaires ou en T et dépassant au moins jusqu'à la surface du milieu filtrant.

13. Système de répartition selon la revendication 12, **caractérisé en ce que** les extrémités des tubes s'étendant verticalement peuvent être fermées de manière imperméable.
